Europäisches Patentamt

European Patent Office

Office européen des brevets

(19)

(11) **EP 0 530 768 B1**

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(51) Int. Cl.⁶: **C04B 28/02**, C04B 24/38
// (C04B28/02, 24:22, 24:26, 24:38)

(21) Anmeldenummer: **92114980.3**

(22) Anmeldetag: **02.09.1992**

(54) **Zusatzmittelkombination zur Verbesserung der Verarbeitbarkeit von wasserhaltigen Baustoffgemischen**

Additive combination for improving the workability of water containing building material mixtures

Combination d'additifs pour améliorer l'aptitude au traitement de mélanges aqueux de matériaux de construction

(84) Benannte Vertragsstaaten:
**AT BE CH DE ES FR GB IT LI**

(30) Priorität: **03.09.1991 DE 4129169**

(43) Veröffentlichungstag der Anmeldung:
**10.03.1993 Patentblatt 1993/10**

(73) Patentinhaber: **HOECHST AKTIENGESELLSCHAFT D-65926 Frankfurt am Main (DE)**

(72) Erfinder:
  • **Böhme-Kovac, Jozef W-6501 Dexheim (DE)**
  • **Girg, Friedrich W-6270 Idstein/Ts. 2 (DE)**
  • **Mann, Heinz-Josef W-6501 Saulheim (DE)**

(56) Entgegenhaltungen:
EP-A- 0 141 360          EP-A- 0 327 351
EP-A- 0 375 332          EP-A- 0 416 405
DE-A- 2 735 216          DE-A- 3 609 545
DE-A- 3 716 974          DE-A- 3 920 025
FR-A- 1 381 817          FR-A- 2 154 035
US-A- 4 654 085          US-A- 4 687 516

**Beschreibung**

Unter wasserhaltigen Baustoffgemischen werden im allgemeinen Putze, Mauermörtel, Dünnbettklebemörtel und Spachtelmassen verstanden, denen die zur Verarbeitung und Verfestigung benötigte Wassermenge entweder im Herstellwerk oder an der Baustelle zugegeben wird.

Diese Baustoffgemische enthalten neben den Hauptbestandteilen - wie Bindemittel, Zuschlag-, Füll- und Zusatzstoffen - noch Zusatzmittel. Die gebräuchlichsten Zusatzmittel sind Verdicker, Luftporenbildner, Dispergiermittel, Verflüssiger, Stabilisatoren und Hydrophobierungsmittel. Von den Verdickern haben in der Praxis Celluloseether die größte Bedeutung erlangt. Celluloseether und insbesondere Methylcellulose beeinflußen die Verarbeitungseigenschaften moderner Baustoffgemische erheblich.

Die Verwendung von Methylcellulose hat entscheidend zur Entwicklung moderner Baustoffgemische, wie z.B. Dünnbettklebemörtel und Maschinenputze, beigetragen. Durch Methylcellulose wird das Wasserrückhaltevermögen der Baustoffgrundmischung deutlich angehoben. Gleichzeitig wird eine Verdickung des Mörtels erreicht, was eine wesentlich bessere Standfestigkeit zur Folge hat. Standfestigkeit von Baustoffgemischen bedeutet, daß z.B. auf der Wand aufgetragener Putzmörtel nicht absackt oder die in ein Mörtelbett eingelegten Fliesen nicht abrutschen.
Um diese Standfestigkeit noch zu verbessern, werden Celluloseether häufig mit synthetischen oder natürlichen organischen Polymeren modifiziert.

Die größte Bedeutung dieser zur Modifizierung von Celluloseethern eingesetzten Polymere haben Polyacrylamid (PAA) bzw. PAA-modifizierte Celluloseether erreicht (DE-A-1 283 726; DE-A-1 646 501; DE-A-2 146 709, US-A-4 021 257).
Neben der Zugabe von Polyacrylamid wird als weitere Modifizierungsvariante in DE-A-3 339 860 die chemische Verknüpfung von Celluloseethern mit Polyacrylamiden beschrieben.
In der noch nicht veröffentlichten deutschen Patentanmeldung mit dem Aktenzeichen P 41 09 092.6 (Titel: Baustoffprodukte enthaltend organische Polymere als Verdicker) werden Kombinationen aus wasserlöslichen natürlichen Polymeren oder deren Derivaten wie Celluloseether, Xanthamgums, Guarderivate, Stärkeether, Johannisbrotkernmehl mit Alkali- und Ammoniumsalzen von vernetzten und gegebenenfalls zusätzlich mit Stärke gepfropften Polyacrylaten und gegebenenfalls mit Zusätzen von Alkali- und Erdalkalisalzen von Kondensationsprodukten der Naphthalinsulfonsäure bzw. Phenolsulfonsäure mit Formaldehyd oder mit sulfonsäuremodifizierten Polykondensationsprodukten aus Melamin und Formaldehyd beschrieben, die als sogenannte Verdicker zur Erhöhung der Viskosität von Baustoffprodukten verwendet werden.

Bei wasserhaltigen Baustoffgemischen wird seitens der Anwender eine gute Verarbeitbarkeit gefordert. Die Verbesserung der Verarbeitbarkeit ist eines der wichtigsten Ziele bei der Weiterentwicklung moderner Baustoffgemische. Zur Beurteilung der Verarbeitbarkeit von Baustoffgemischen gibt es eine Reihe von Bewertungskriterien.

Die Verarbeitbarkeit von Spachtelmassen und Fliesenklebern kann anhand folgender Bewertungskriterien beurteilt werden.
Wasserfaktor:
Verhältnis aus benötigter Wassermenge zu Baustoff-Trockenmischung, d.h. Wassermenge (in Gew.Teilen auf 100 GT Trockengemisch) die erforderlich ist, um dem jeweiligen Baustoffgemisch eine praxisgerechte Verarbeitungskonsistenz zu geben. Der Wassertaktor hängt ab von der Art und Menge der Bindemittel, der Kornfeinheit und Wasserabsorption der Füll- und Zuschlagstoffe, den verdickend bzw. plastifizierend wirkenden Eigenschaften der verwendeten Mörteladditive sowie von der vom Verarbeiter angestrebten, auf die jeweiligen Anwendungen abgestimmte Konsistenz des Baustoffgemisches.
Standvermögen:
Fliesenkleber besitzen Standvermögen, wenn Fliesen und Platten, die in die frisch aufgetragenen Klebemörtel eingelegt werden, an vertikalen Flächen (Wänden) nicht abrutschen. Spachtel-, Fugen- und Füllmassen zeigen Standvermögen, wenn sie in Löchern und Fugen nach dem Verfüllvorgang nicht absacken oder bei Flächenbeschichtung auf vertikalen Oberflächen während und nach der Beschichtung nicht abrutschen.
Aufziehen:
Beschichtungsvorgang mit Baustoffgemischen wie Spachtel-, Fugen- oder Füllmassen auf vertikalen und horizontalen Oberflächen.
Aufkämmen:
Beschichtungsvorgang für Fliesen-, Platten- und Blockklebemörtel mittels Kammkelle oder Kammspachtel (drei- oder viereckig gezähnt) auf den jeweiligen Untergründen. Hierdurch wird eine gleichmäßig dicke Mörtelschicht erzielt.
Glätten und Schließen der Oberfläche:
Endbearbeitungsvorgang bei Spachtel-, Fugen- und Füllmassen zur Erzielung einer glatten Oberfläche.

Die Verarbeitbarkeit von Putzen und Mörteln kann anhand folgender Bewertungskriterien beurteilt werden.
Standvermögen:
Putze und Mörtel besitzen Standvermögen, wenn sie während des Auftrags auf Wänden und Decken sowie während des nachfolgenden Glättvorgangs z.B. dem Verziehen mit einer Ziehlatte (Kartätsche) nicht absacken, d.h. sich standfest verhalten.

Verziehen:

Erster Glättvorgang, unmittelbar nach Auftrag des Putzes oder Mörtels auf Wänden und Decken.

Begradigen (Nachschneiden):

Zweiter Glättvorgang mit Ziehlatte (Kartätsche) auf dem bereits etwas angesteiften Putz oder Mörtel. Dieser Gläffvorgang dient dazu, die noch ungleichmäßig strukturierte Putzoberfläche zu begradigen.

Schlämmebildung (Glättschmand):

Nach Befeuchtung der bereits etwas engetrockneten Putzoberfläche, z.B. durch Bespritzen mit Wasser, wird mit einer Schwamm- oder Filzscheibe nachgerieben, wobei sich auf der Putzoberfläche eine flüssig-pastöse Masse, der sogenannte Glättschmand anreichert. Das Ausmaß der Schlämmedildung sowie die Konsistenz des Glättschmands, z.B. dünnflüssig oder dickflüssig-pastös, haben großen Einfluß auf die Oberflächengüte des erhärteten Putzes.

Glätten:

Abschließender Bearbeitungsvorgang mit Glättkelle oder Traufel zur Erzielung der endgültigen Oberflächenglätte des Putzes.

Vor allem die durch die eingesetzten Celluloseether hervorgerufene Klebneigung wasserhaltiger Baustoffgemische sollte bei gipshaltigen Putzen und Mörteln gering sein, da sie sich nachteilig auf die Verarbeitbarkeit auswirkt. Es zeigt sich, daß vor allem Putze und Mörtel mit starker Klebneigung schlecht aufzuziehen sind und nur unter körperlichen Anstrengungen verarbeitet werden können.

Besonders seitens der Anwender besteht daher der Wunsch nach wasserhaltigen Baustoffgemischen, die eine verringerte Klebneigung besitzen und deren Verarbeitbarkeit somit verbessert wird.

Überraschend wurde nun gefunden, daß Zusatzmitttelkombinationen aus wasserlöslichen Celluloseethern und deren Derivaten, Polyacrylamid, Alkali- oder Ammoniumsalzen von vernetzten und gegebenenfalls zusätzlich mit Stärke gepfropften Polyacrylaten, in der Technik als Superabsorbents (SAPs) bezeichnet, gegebenenfalls Stärkeethern und gegebenenfalls Zusätzen von Alkali-, Erdalkali- oder Ammoniumsalzen von Kondensationsprodukten der Naphtalinsuffonsäure bzw. Phenolsuffonsäure mit Formaldehyd oder mit sulfonsäuremodifizierten Polykondensationsprodukten aus Melamin und Formaldehyd, die Verarbeitbarkeit von wasserhaltigen Baustoffgemischen verbessern, indem sie eine verringerte Klebneigung der wasserhaltigen Baustoffgemische bewirken.

Auch Zusatzmittelkombinationen der genannten wasserlöslichen Celluloseether und deren Derivate mit Polyacrylamid und mit den Superabsorbents ergeben eine signifikante Verringerung der Klebneigung gegenüber den bekannten Zusatzmittelkombinationen in wasserhaltigen Baustoffgemischen.

Gegenstand der Erfindung sind Zusatzmittelkombinationen für wasserhaltige Baustoffgemische enthaltend

a) mindestens 65 Gew.-%, bevorzugt 65 bis 98 Gew.-% eines wasserlöslichen Celluloseethern oder eines Derivates,
b) 1 bis 15 Gew.-% Polyacrylamid,
c) 1 bis 20 Gew.-% eines Alkali- oder Ammoniumsalzes eines vernetzten, gegebenenfalls mit Stärke gepfropften Polyacrylats
d) 0 bis 20 Gew.-% eines Stärkeethers und
e) 0 bis 15 Gew.-% eines wasserlöslichen Alkali-, Erdalkali- oder Ammoniumsalzes von Arylsulfonsäure-Formaldehyd-Kondensationsprodukten oder eines sulfonsäuremodifizierten Polykondensationsproduktes aus Melamin und Formaldehyd.

Gegenstand der Erfindung sind ferner Baustoffgemische, welche diese Zusatzmittelkombination enthalten.

Die beschriebenen Zusatzmittelkombinationen eignen sich für alle wasserhaltigen Baustoffgemische, insbesondere für Putze, Mörtel, Klebemörtel und Spachtelmassen.

Zur Verbesserung der Verarbeitbarkeit enthalten diese Baustoffgemische eine Mischung der obengenannten Komponenten a) bis e) in der angegebenen Zusammensetzung. Diese Komponenten sollen im folgenden näher beschrieben werden.

a) Wasserlösliche Celluloseether und deren Derivate:

Als wasserlösliche Celluloseether und deren Derivate für die erfindungsgemäße Zusatrmittelkombination kommen in Frage: Methylcellulose, Methylhydroxyethylcellulose, Methylhydroxypropylcellulose, Hydroxyethylcellulose sowie deren hydrophob substituierten Derivate, Hydroxyethylhydroxypropylcellulose sowie deren hydrophob substituierten Derivate, Carboxymethylcellulose oder Carboxymethylhydroxyalkylcellulose. Bevorzugt werden Hydroxyethyl- und MethylhydroxyalkylceIluloseether.

Die Viskositätsgrenzen dieser Celluloseether liegen üblicherweise bei 10 bis 500 000, insbesondere 50 bis 150 000 mPa·s (gemessen als 2 %ige wäßrige Lösung mit Höppler-Kugelfall-Viskosimeter bei 20°C in destilliertern Wasser).

Die in der Praxis wichtigsten Celluloseether werden in Tabelle I mit ihren Veretherungsdaten aufgeführt. Der durchschnittliche Substitutionsgrad (DS) gibt die durchschnittliche Anzahl der Alkylgruppen (hier: Methyl, Ethyl und Propyl) pro Anhydroglucoseeinheit an. Der molare Substitutionsgrad (MS) gibt die durchschnittliche Anzahl an Hydroxyalkylendgruppen (hier: Ethyl und Propyl) pro Anhydroglucoseeinheit an. Bei der in Tabelle I aufgeführten Alkoxy-hydroxypropylhydroxyethylcellulose besteht die Alkoxygruppe aus 2 bis 20 C-Atomen, die geradkettig oder verzweigt miteinander verknüpft sein können und 0,05 bis 50 Gew.-%, bezogen auf das Gewicht des substituierten Celluloseethers, ausmachen.

In Tabelle II sind die in den Versuchen und Vergleichsversuchen aufgeführten Celluloseether angegeben.

Tabelle I

| Wasserlösliche Celluloseether und deren Derivate | | | | |
|---|---|---|---|---|
| | DS | | MS | |
| Methylcellulose | 1,4 - 2,2 | | | |
| Methylhydroxyethylcellulose | 1,3 - 2,0 | | | 0,05 - 0,5 |
| Methylhydroxypropylcellulose | 1,3 - 2,2 | | | 0,1 - 1,0 |
| Hydroxyethylcellulose | - | | | 1,5 - 3,5 |
| Hydroxyethylhydroxypropylcellulose | | MS HE: | 0,9 - 1,2 | |
| | | MS HP: | 0,6 - 0,9 | |
| Hydroxypropylcellulose | - | | | 2,0 - 3,5 |
| Ethylhydroxyethylcellulose | 0,7 - 1,2 | | | 0,8 - 2,7 |
| Carboxymethylcellulose | 0,5 - 1,5 | | | - |
| Carboxymethylhydroxyethylcellulose | 0,3 - 0,6 | | | 0,3 - 2,3 |
| Alkoxy-hydroxypropyl-hydroxyethylcellulose | - | | | 1,5 - 3,5 |

Tabelle II

| | Viskositätsstufe gemessen in 2 %iger wäßriger Lösung | Veretherungsgrad | |
|---|---|---|---|
| | DS | | MS |
| Methylhydroxyethylcellulose (1) | 30 000 | 1,5 | 0,12 |
| Methylhydroxyethylcellulose (2) | 15 000 | 1,8 | 0,12 |
| Methylhydroxyethylcellulose (3) | 6 000 | 1,6 | 0,15 |

b) Polyacrylamid (PAA)

Als Polyacrylamide für die erfindungsgemäße Zusatzmittelkombination werden anionische, kationische und nichtionische Polyacrylamide mit einem Molekulargewicht (Gewichtsmittel) $\overline{M}_W$ von $1 \cdot 10^6$ bis $10 \cdot 10^6$ verwendet.

Bei den verwendeten anionischen Polyacrylamiden handelt es sich um teilverseifte Polyacrylamide, Copolymerisate von Acrylamid mit Alkaliacrylaten, Vinylsulfonaten und 2-Acrylamido-2-methyl-propansulfonaten.

Bei den verwendeten kationischen Polyacrylamiden handelt es sich um Copolymerisate des Acrylamids mit Salzen oder Quaternierungsprodukten von Diethylaminoethylacrylaten, Dimethylaminoethylmethacrylat, Dimethylaminopropylmethacrylamid, Dialkylbisallylammoniumsalzen oder aminomethyliertes Polyacrylamid.

Bei den verwendeten nichtionogenen Polyacrylamiden handelt es sich um Homopolymerisate des Acrylamids mit geringen durch unkontrollierte Verseifung entstandene Anteilen an Carboxylgruppen.

Bevorzugt werden die in Tabelle III aufgeführten Polyacrylamide als Komponente b) in den erfindungsgemäßen Zusatzmittelkombinationen eingesetzt.

Tabelle III

| In Zusatzmittelkombination für: | Ionogenität | Viskosität *) 0,5%ig in 10%iger NaCl-Lsg. mPa s | Stick- stoffgeh. % | Kornfein- heit < 1,0 mm % |
|---|---|---|---|---|
| Gipsmaschinenputz (GMP) | nicht ionisch, schwach anionisch | 130 | 18 | 100 |
| oder Gipskalkmaschinenputz (GKMP) | kationisch | 200⁺⁾ | 15,5 | 100 |
| Zementkalkgrundputz (ZKP) | anionisch | 200 | 0,5 | 100 |
| Fliesenkleber (Zement-Basis) (ZFK) | anionisch | 130 | 8 | 100 |
| Zementspachtelmasse (ZSM) | anionisch | 150 | 10,5 | 100 |
| Gipsspachtelmasse (GSP) | anionisch | 150 | 10,5 | 100 |

*) Viskositätsmessung mit Brookfield RV, Spindel 1, 10 UpM, 20°C;

+) Konzentration 1 %ig in 10 %iger NaCl-Lösung

c) Superabsorbents (SAPs)

Superabsorbents sind Gitterstrukturen auf der Basis neutralisierter bzw. teilweise neutralisierter Polyacrylsäuren, die bei der Radikal-Coplymerisation der Monomeren mit kleinen Mengen bestimmter Vernetzungsmittel entstehen. Für die Herstellung einer polymeren Gitterstruktur gibt es im wesentlichen zwei Herstellungsverfahren:

1) Die polymere Gitterstruktur wird in einem Polymerisationsschritt, beginnend mit den Monomeren, synthetisiert, wobei bestimmte Vernetzungsreagenzien, wie z.B. Methylenbisacrylamid, Diethylenglykoldialkylether unnd Vinylverbindungen, für die Verzweigung und Bildung der Gitterstruktur benötigt werden.
2) Ein vorsynthetisiertes, geradkettiges oder verzweigtes Polymer wird vernetzt.

Für die Herstellung von SAPs besitzt das unter 1) genannte Herstellungsverfahren die weitaus größte Bedeutung. Für den Polymerisationsprozeß im Herstellungsverfahren 1) werden Polymerisationstechniken, wie z.B. die Emulsions- und Gelpolymerisation eingesetzt. Dabei wird eine wäßrige Lösung des Monomers Acrylsäure mit geringen Mengen eines Vernetzers polymerisiert. Wasser dient als Verdünnungs- und Lösemittel und hilft die bei diesem exothermen Prozeß gegebenenfalls auftretenden hohen Temperaturen zu vermeiden. Die Konzentration des Monomeren in der wäßrigen Lösung beträgt üblicherweise bis zu 60 Gew.-%. Die Mengen an eingesetztem Vernetzer liegen im Bereich von 0,05-1,5 mol-%. Die Polymerisation kann im Kessel oder mit Hilfe des Dünnschichtverfahrens erfolgen.

Die nach den genannten beiden Methoden hergestellten Suprabsorbents können auch mit Stärke gepfropft werden. Diese Pfropfung mit Stärke erfolgt während des Polymerisations- und Vernetzungsprozesses im Rahmen eines sogenannten Eintopf-Verfahrens. Dabei wird die Stärke durch Erhitzen in Wasser aufgeschlossen und als Lösung zu Beginn des Polymerisationsprozesses zugegeben. Der Stärkeanteil, bezogen auf den Superabsorbent, kann 3 bis 30 Gew.-% betragen. Superabsorbents sind in der Lage, große Volumina wäßriger Flüssigkeiten unter Bildung einer stabilen Gelstruktur zu absorbieren und auch bei Belastung festzuhalten. Diese Fähigkeit ist Voraussetzung für die erfolgreiche Anwendung in dem Bereich Baustoffe und Klebstoffe. Die Menge an absorbierter wäßriger Flüssigkeit liegt im Bereich bis zum 400- bis 1000-fachen des Eigengewichts.

Superabsorbents können nur im pH-Bereich von 4 bis 10 Wasser absorbieren. Eine für diesen Vorgang erforderliche teilweise Neutralisation kann vor oder nach der Polymerisation vorgenommen werden. Das durch die Polymerisation entstandene Produkt ist ein feuchtes Gel, das mit einem Gelschneider zerkleinert und anschließend getrocknet wird. Die Vernetzung zur Herstellung von Superabsorbents erfolgt weitgehend über kovalente Bindungen zwischen den einzelnen Polymerketten und den verwendeten Vernetzungsmitteln. Geeignete Vernetzungsmittel zur Ausbildung von kovaleriten Bindungen sind sogenannte polyfunktionale Monomere, d.h. Vernetzungsmittel mit Doppelbindung. Typische Vertreter dieser polyfunktionellen Moleküle sind Methylenbisacrylamid, Diethylenglykoldialkylether und Vinylverbindungen wie z.B. Vinylether, Vinylester und Vinylphosphonsäuren.

Weitere Möglichkeiten für die Vernetzung über kovalente Bindungen bieten polyfunktionale Moleküle wie z.B. Diepoxide, Azirine und Polyalkohole.

Die letzt genannten Vernetzungsmittel sind in der Lage bereits gering vernetzte Polymerketten zusätzlich zu vernetzen. Durch diese zusätzliche Oberflächenvernetzung können Superabsorbents mit unterschiedlichem Vernetzungsgrad hergestellt werden. Dies erlaubt Kombinationen der guten Absorptionseigenschaften der gering vernetzten Superabsorbents mit den Vorteilen der hoch vernetzten Superabsorbents. Gering vernetzte Superabsorbents besitzen eine hohe Absorptionsfähigkeit für wäßrige Flüssigkeiten, hohe Mengen an extrahierbarer wäßriger Flüssigkeit aber ein geringes Absorptionsverhältnis in Folge Gelblockierung. Die hochvernetzten Superabsorbents besitzen keine Gelblockierung, demzufolge eine bessere Absorptionskapazität und Stabilität unter Druckbeanspruchung.

Zur Erzielung einer optimalen Vernetzungs- und Gitterstruktur der Superabsorbents werden im Herstellungsprozeß Gemische von hoch und gering reaktiven Vernetzungsreagenzien eingesetzt, wobei durch entsprechende Variation der Mischungsverhältnisse der eingesetzten Vernetzungskomponenten die Dichte und Beschaffenheit der Gitterstrukturen über weite Bereich verändert und den Erfordernissen entsprechend angepaßt werden können.

Merkmale der geeigneten Superabsorbents in der erfindungsgemäßen Zusatzmittelkombination sind eine möglichst hohe Gesamtabsorptionsfähigkeit für entionisiertes Wasser (> 100 g/g) und eine Absorptionsfähigkeit unter Druck von < 50 ml 0,9 %ige NaCl-Lösung pro g.

Beispiele für Superabsorbents die in den erfindungsgemäßen Zusatzmittelkombinationen Verwendung finden sind in Tabelle IV aufgeführt.

d) Stärkeether
Die Kenndaten der Stärkeether, die in den erfindungsgemäßen Zusatzmittelkombinationen Verwendung finden sind in Tabelle V aufgeführt.

e) Wasserlösliche Kondensationsprodukte auf Basis Arylsulfonsäuren und Formaldehyd, sowie deren Alkali-, Ammonium- und Erdalkalisalzen.
Als wasserlösliche Polykondensationsprodukte kommen in Frage:

1. Polykondensationsprodukte aus Naphthalinsulfonsäure mit Formaldehyd in Form ihrer Alkali-, Ammonium- und Erdalkalisalze;
2. Sulfonsäuremodifizierte Polykondensationsprodukte aus Melamin und Formaldehyd in Form ihrer Alkali oder Ammoniumsalze.

Die Kenndaten der wasserlöslichen Kondensationsprodukte auf Basis Arylsulfonsäuren und Formaldehyd sind in Tabelle VI aufgeführt.

Tabelle IV

| | Gesamtabsorptionsfähigkeit in | | Zentrifugenretention 0,9 %ige NaCl-Lsg. (g/g) | Absorptionsfähigkeit unter Druck 0,9 %ige NaCl-Lsg. (ml/g) | Extrahierbares (%) |
|---|---|---|---|---|---|
| | ention. $H_2O$ (g/g) | 0,9 %ige NaCl-Lsg. (g/g) | | | |
| Superabsorbent (1) [2] Sanwet® IM 1500 | 500 | 50 | 32 | 15 | 7 |
| Superabsorbent (2) [2] Sanwet® IM 1000 | 1000 | 65 | 42 | 5 | 14 |
| Superabsorbent (3) [1] Sanwet® IM 5000S | 400 | 48 | 32 | 32 | 3 |

Hersteller:
Hoechst AG 1)
Hoechst Celanese Corp. 2)

Tabelle V

| Stärkeether | MS | DS | Viskosität[*] gem. als 2%ige wässr. Lösung |
|---|---|---|---|
| Hydroxypropylstärke | 0,1 - 0,8 | - | 5 - 100 |
| Carboxymethylstärke | - | 0,1 - 0,8 | 5 - 500 |
| Hydroxypropylcarboxymethylstärke | 0,1 - 0,8 | 0,1 - 0,5 | 5 - 500 |

* Messung mit Höppler-Kugelfallviskosimeter bei 20°C in dest. Wasser.

Tabelle VI

| Naphthalinsulfonsäure-Formaldehyd Kondensationsprodukt; Na-Salz: | |
|---|---|
| Eigenschaften | Typische Daten |
| Lieferform | flüssig/pulverförmig |
| Konzentration (Aktivgehalt) | 20 - 40 %ig / 70 - 96 % |
| Na-Sulfatgeb. | 0 - 25 % |
| Molare Masse | 4 000 - 40 000 |
| pH-Wert | 6,5 - 11 |
| Viskosität (23°C) | 10 - 150 mPa.s (fl. Produkte) |
| Melamin-Formaldehyd Kondensationsprodukt, sulfoniert; Na-Salz: | |
| Eigenschaften | Typische Daten |
| Lieferform | flüssig/pulverförmig Granulate |
| Konzentration (Aktivgehalt) | ca. 20 %ig / 80 - 100 % |
| Molare Masse | 20 000 - 30 000 |
| pH-Wert | 8 - 12 |
| Dichte | flüssige Produkte: 1,1 $g/m^2$ Festprodukte: 1,7 - 1,9 $g/cm^3$ |

Die erfindungsgemäßen Zusatzmittelkombinationen bestehen aus den Komponenten a), b), c) und gegebenenfalls d) und e).

Die Komponenten a) bis e) können aus einer Verbindung oder einem Gemisch mehrerer Verbindungen bestehen. So ist es denkbar, daß im Falle der Komponente a) diese aus einem Celluloseether oder eines Derivates besteht, oder die Komponente a) besteht aus einem Gemisch mehrerer Celluloseether oder ihrer Derivate.

Die pulverförmigen oder granulatförmigen Komponenten a), b), c) und gegebenenfalls d) und e) können den Baustoffprodukten einzeln zugemischt werden oder man mischt zunächst die Komponenten a), b), c), d) und e) miteinander und gibt diese Mischung dann zu den Baustoffprodukten. Das Einarbeiten dieser Komponenten in die Baustoffprodukte erfolgt durch übliche Rühr- und Mischprozesse.

Die Summe der Komponenten a), b), c), d) und e) der Zusatzmittelkombination in den Baustoffprodukten beträgt 0,01 bis 2, vorzugsweise 0,02 bis 1 Gew.-%, bezogen auf die Trockenmasse.

Beispiele:

Um die Vorteile der erfindungsgemäßen Zusatzmittelkombinationen gegenüber den herkömmlichen Zusatzmittelkombinationen belegen zu können, wurden zahlreiche Versuche mit mineralischen Baustoffgemischen durchgeführt. Diese Versuche bestanden in der Herstellung, der Verarbeitung und der Bewertung der Verarbeitbarkeit der mineralischen Baustoffgemische.

Zu Versuchszwecken wurden die mineralischen Baustoffgemische (1) bis (6) eingesetzt. Ihre Zusammensetzung wird im Gewichtsteilen angegeben und ist Tabelle VII zu entnehmen. Die Herstellung erfolgte durch einfaches Mischen der Bestandteile in den angegebenen Mengenverhältnissen.

Diesen Baustoffgemischen (1) bis (6) wurden sowohl erfindungsgemäße Zusatzmittelkombinationen als auch herkömmliche Zusatzmittelkombinationen zugesetzt.

Die Herstellung der jeweiligen Zusatzmittelkombination erfolgte durch einfaches Mischen der einzelnen Komponenten.

Die Zusammensetzung der erfindungsgemäßen Zusatzmittelkombinationen C, D, F und G, angegeben in Gewichtsteilen, ist den Tabellen VIII zu entnehmen. Die Zusammensetzung der herkömmlichen Zusatzmittelkombinationen A, B und E, angegeben in Gewichtsteilen, ist Tabelle IX zu entnehmen.

Für die Zusatzmittelkombinationen in den durchgeführten Versuchen (Tabellen X und XII) wurden folgende Substanzen verwertet:

Versuche 1A und 1C:
Methylhydroxyethylcellulose (1) aus Tabelle II;
Polyacrylamid für Gipsmaschinenputz aus Tabelle III (nicht ionisch);
Superabsorbent (3) aus Tabelle IV (nur 1C)

Versuche 2A und 2C:
Methylhydroxyethylcellulose (1) aus Tabelle II;
Polyacrylamid für Gips-Kalk-Maschinenputze aus Tabelle III (kationisch);
Superabsorbent (1) aus Tabelle IV (nur 2C)

Versuche 3B und 3D:
Methylhydroxyethylcellulose (2) aus Tabelle II;
Polyacrylamid für Zementkalkputz aus Tabelle III (anionisch);
Melamin-Formaldehyd - sulfoniert - Na-Salz aus Tabelle VI (Melment® F 10,
Hersteller: Süddeutsche Kalk-Stickstoff-Werke (SKW), Trostdorf)
Superabsorbent (1) aus Tabelle IV (nur 3D)

Versuche 4E, 4F, 4G, 5E, 5F, 5G, 6E, 6F, 6G:
Methylhydroxyethylcellulose (3) aus Tabelle II;
Hydroxypropylstärke mit MS = 0,5 aus Tabelle V (nicht 4G, 5G, 6G);
Polyacrylamid für Zementspachtelmasse und Gispspachtelmasse aus Tabelle III, anionisch (4E, 4F, 4G, 6E, 6F, 6G);
Polyacrylamid für Fliesenkleber/Zementbasis aus Tabelle III, anionisch (5E, 5F, 5G).
Superabsorbent (3) aus Tabelle IV (4F, 4G, 5F, 5G, 6F, 6G)

Als Luftporenbildner wurden Hostapur®OSB und Genapol®PF80 (Hersteller: Hoechst AG) verwendet.
Bei den eingesetzten Stärkeethern handelt es sich um handelsübliche Präparate.
Tabelle X zeigt die Zusammensetzung der geprüften Baustoffgemische 1A, 1C, 2A, 2C, 3D und 3C.
Die Verarbeitung erfolgte mittels Spritzputzmaschine. Tabelle XI zeigt das Ergebnis der Spritzversuche.
Tabelle XII zeigt die Zusammensetzung der geprüften Baustoffgemische 4E, 4F, 4G, 5E, 5F, 5G, 6E, 6F, 6G und die Bewertung der Verarbeitbarkeit.

Versuchsergebnisse:

Die Versuche 1C, 2C und 3D, die die erfindungsgemäßen Zusatzmittelkombinationen C und D enthalten, zeigen hinsichtlich der Bewertungskriterien:

- Standvermögen
- Verziehen
- Begradigen
- Schlämmebildung und
- Glätten im Vergleich zu den herkömmlichen Zusatzmittelkombinationen 1A, 2A und 3B deutlich bessere Ergebnisse.

Die Versuche 4F, 4G, 5F, 5G, 6F und 6G, die die erfindungsgemäßen Zusatzmittelkombinationen F und G enthalten, zeigen hinsichtlich der Bewertungskriterien:

- Aufziehen
- Aufkämmen und
- Glätten und Schließen der Oberfläche im Vergleich zu den herkömmlichen Zusatzmittelkombinationen deutlich bessere Ergebnisse.

Die Beurteilung der Bewertungskriterien erfolgte aufgrund einer Werteskala von 1 bis 6, die dem Schulnotensystem von 1 (sehr gut) bis 6 (ungenügend) entspricht. Tendenzen zwischen den Noten von 1 bis 6 werden mit + (plus) oder - (minus) hinter den Zahlen angegeben.

Tabelle VII

| Zusammensetzung der mineralischen Baustoffgemische (1) bis (6) (100 Gewichtsteile) |
|---|
| (1) Gipsmaschinenputz (GMP): |
| 40 Gew.-Tl. Gipshalbhydrat |
| 50 Gew.-Tl. Hochbrandgips |
| 2 Gew.-Tl. Kalkhydrat |
| 7,5 Gew.-Tl Kalksteinsand 0 - 1 mm |
| 0,5 Gew.-Tl. Perlite 0 - 1 mm |
| (2) Gipskalkmaschinenputz (GKMP): |
| 40 Gew.-Tl. Gipshalbhydrat |
| 10 Gew.-Tl. Kalkhydrat |
| 50 Gew.-Tl. Kalksteinsand 0 - 1 mm |
| (3) Zement-Kalk-Grundputz (ZKP): |
| 12 Gew.-Tl. Portlandzement |
| 6 Gew.-Tl. Kalkhydrat |
| 10 Gew.-Tl. Kaksteinmehl |
| 72 Gew.-Tl. Kalksteinsand 0,1 - 1,5 mm |
| (4) Zementspachtelmasse (ZSM): |
| 30 Gew.-Tl. Portlandzement |
| 3 Gew.-Tl. Kalkhydrat |
| 10 Gew.-Tl. Kalksteinmehl |
| 57 Gew.-Tl. Quarzsand 0,05 - 0,4 mm |
| (5) Fliesenkleber (Zementbasis) (ZFK): |
| 40 Gew.-Tl. Portlandzement |
| 60 Gew.-Tl. Quarzsand 0,05 - 0,4 mm |
| (6) Gipsspachtelmasse (GSP): |
| 85 Gew.-Tl. Gipshalbhydrat (Alabastergips) |
| 15 Gew.-Tl. Kalksteinmehl |

Tabelle VIII

| Komponente | C (Gew.-Tl) | D (Gew.-Tl) | F (Gew.-Tl) | G (Gew.-Tl) |
|---|---|---|---|---|
| Celluloseether | 88 | 83 | 80 | 88 |
| Stärkeether | - | - | 10 | - |
| Polyacrylamid | 6 | 5 | 5 | 5 |
| Superabsorbent | 6 | 5 | 5 | 7 |
| wasserl. Polykondensations-produkt, Basis Naphthalinsulfon-säure-Formaldehyd-Alkalisalz oder Melamin-Formaldehyd -sulfoniert - Alkalisalz | - | 7 | - | - |

Tabelle IX

| Komponente | A (Gew.-Tl) | B (Gew.-Tl) | E (Gew.-Tl) |
|---|---|---|---|
| Celluloseether | 94 | 88 | 80 |
| Stärkeether | - | - | 15 |
| Polyacrylamid | 6 | 5 | 5 |
| wasserl. Polykondensationsprodukt, Basis Naphthalinsulfonsäure-Formaldehyd-Alkalisalz oder Melamin-Formaldehyd - sulfoniert - Alkalisalz | - | 7 | - |

Tabelle X:

| | 1 A GT | 1 C GT | 2 A GT | 2 C GT | 3 B GT | 3 D GT |
|---|---|---|---|---|---|---|
| GMP (1) | 100 | 100 | - | - | - | - |
| GKMP (2) | - | - | 100 | 100 | - | - |
| ZKP (3) | - | - | - | - | 100 | 100 |
| Luftporenbildner (Kombination aus Olefinsulfonat und Ethylenoxid/Propylenoxid-Blockpolymerisat, Hostapur® OSB mit Genapol® PF 80 Plv. im Verhältnis 1:2) | 0,03 | 0,03 | 0,05 | 0,05 | 0,05 | 0,05 |
| Stärkeether | 0,03 | 0,03 | 0,03 | 0,03 | 0,02 | 0,02 |
| Zusatzmittelkombination (Tab. VIII u. IX) | 0,18 | 0,18 | 0,18 | 0,18 | 0,1 | 0,1 |
| Gipsabbindeverzögerer | 0,1 | 0,1 | 0,1 | 0,1 | - | - |
| Hydrophobiermittel (handelsüblich) | - | - | - | - | 0,1 | 0,1 |

Tabelle XI:

Ergebnisse der Spritzversuche und Putzmaschine

| | 1 A GT | 1 C GT | 2 A GT | 2 C GT | 3 B GT | 3 D GT |
|---|---|---|---|---|---|---|
| Wasserdurchflußmenge (l/h) | 720 | 740 | 600 | 620 | 320 | 340 |
| Förderdruck, 10 m-Schlauch (bar) | 9,5 | 9,0 | 8,5 | 9,0 | 12,0 | 11,5 |
| Luftporengehalt (Vol.-%) | 10,0 | 10,5 | 9,5 | 9,5 | 11,0 | 10,5 |
| Frischmörtelrohdichte (kg/dm³) | 1,50 | 1,48 | 1,61 | 1,62 | 1,83 | 1,82 |
| Konsistenz, Ausbreitmaß (mm) | 164 | 165 | 166 | 165 | 161 | 160 |
| Spritzbild | normal | normal | normal | normal | normal | normal |
| Standvermögen | 2- | 2 | 2 | 2 | 2 | 2 |
| Verziehen (1 min n.Spritzauftrag) | 2 | 2+ | 2- | 2+ | 2 | 2 |
| Begradigen (Nachschneiden) | 2 | 2+ | 2- | 2+ | 2 | 2+ |
| Schlämmebildung | 2 | 1 | 2 | 1 | entfällt | entfällt |
| Glätten | 2- | 1 | 2 | 1 | entfällt | entfällt |

Tabelle XII

| | 4 E Gew.-Tl. | 4 F Gew.-Tl. | 4 G Gew.-Tl. | 5 E Gew.-Tl. | 5 F Gew.-Tl. | 5 G Gew.-Tl. | 6 E Gew.-Tl. | 6 F Gew.-Tl. | 6 G Gew.-Tl. |
|---|---|---|---|---|---|---|---|---|---|
| ZSM (4) | 100 | 100 | 100 | - | - | - | - | - | - |
| ZFK (5) | - | - | - | 100 | 100 | 100 | - | - | - |
| GSP (6) | - | - | - | .. | - | - | 100 | 100 | 100 |
| Zusatzmittelkombination lt. Tab. VIII u. IX | 0,4 | 0,4 | 0,4 | 0,5 | 0,5 | 0,5 | 0,6 | 0,6 | 0,6 |
| Wasserfaktor | 0,25 | 0,25 | 0,25 | 0,3 | 0,3 | 0,3 | 0,6 | 0,6 | 0,6 |
| Standvermögen | normal | normal | normal | normal | normal | normal | normal | normal | normal |
| Aufziehen | 2 | 1 | 1 | - | - | - | 2 | 1 | 1 |
| Aufkämmen | - | - | - | 2 | 2+ | 2+ | - | - | - |
| Glätten bzw. Schließen der Oberfläche | 2 | 1 | 1 | entfällt | entfällt | entfällt | 2 | 1 | 1 |

EP 0 530 768 B1

**Patentansprüche**

1.  Zusatzmittelkombination für wasserhaltige Baustoffgemische bestehend aus

    a) mindestens 65 Gew.-%, bevorzugt 65 bis 98 Gew.-% eines wasserlöslichen Celluloseethers oder eines Derivates,
    b) 1 bis 15 Gew.-% Polyacrylamid,
    c) 1 bis 20 Gew.-% eines Alkali- oder Ammoniumsalzes eines vernetzten, gegebenenfalls mit Stärke gepfropften Polyacrylats,
    d) 0-20 Gew.-% Stärkeether und
    e) 0 bis 15 Gew.-% eines wasserlöslichen Alkali-, Erdalkali- oder Ammoniumsalzes von Arylsuffonsäure-Formaldehyd-Kondensationsprodukten oder eines sulfonsäuremodifizierten Polykondensationsproduktes aus Melamin und Formaldehyd.

2.  Zusatzmittelkombination nach Anspruch 1, dadurch gekennzeichnet, daß sie als wasserlösliche Celluloseether Methylhydroxyalkylcellulose, Hydroxyalkylcellulose und/oder Alkoxyhydroxyethylhydroxypropylcellulose mit einer Viskosität im Bereich von 10 bis 500000, insbesondere 50 bis 150000 mPa·s, enthält.

3.  Zusatzmittelkombination nach Anspruch 1 oder 2, dadurch gekennzeichnet, daß sie als Polyacrylamide anionische, kationische und/oder nichtionische Polyacrylamide mit einem Molekulargewicht (Gewichtsmittel) $\overline{M}_w$ von $1 \cdot 10^6$ bis $10 \cdot 10^6$ enthält.

4.  Zusatzmittelkombination nach einem der Ansprüche 1 bis 3, dadurch gekennzeichnet, daß sie als Stärkeether Hydroxypropylstärke, Carboxymethylstärke und/oder Hydroxypropylcarboxymethylstärke enthält.

5.  Baustoffgemische, enthaltend eine Zusatzmittelkombination nach einem der Ansprüche 1 bis 4.

6.  Baustoffgemische nach Anspruch 5, enthaltend 0,01 bis 2, bevorzugt 0,02 bis 1 Gew.-%, bezogen auf die Trockenmasse, der Zusatzmittelkombination.

7.  Verwendung der Zusatzmittelkombination nach einem der Ansprüche 1 bis 4 in Baustoffgemischen, insbesondere für Zementfliesenkleber, Spachtelmassen und Putze.

**Claims**

1.  An additive combination for water-containing mixtures of building materials, comprising

    a) at least 65% by weight, preferably 65 to 98% by weight, of a water-soluble cellulose ether or a derivative thereof,
    b) from 1 to 15% by weight of polyacrylamide,
    c) from 1 to 20% by weight of an alkali metal salt or ammonium salt of a crosslinked polyacrylate which may be starch-grafted,
    d) from 0 to 20% by weight of a starch ether and
    e) from 0 to 15% by weight of a water-soluble alkali metal salt, alkaline earth metal salt or ammonium salt of an arylsulfonic acid-formaldehyde condensation product or of a sulfonic acid-modified product of the polycondensation of melamine and formaldehyde.

2.  An additive combination as claimed in claim 1, wherein the water-soluble cellulose ether is methylhydroxyalkylcellulose, hydroxyalkylcellulose and/or alkoxyhydroxyethylhydroxypropylcellulose having a viscosity in the range from 10 to 500,000 mPa·s, in particular from 50 to 150,000 mPa·s.

3.  An additive combination as claimed in claim 1 or 2, wherein the polyacrylamide is an anionic, cationic and/or nonionic polyacrylamide having a molecular weight (weight average) $\overline{M}_w$ of from $1 \times 10^6$ to $10 \times 10^6$.

4.  An additive combination as claimed in any one of claims 1 to 3, wherein the starch ether is hydroxypropyl starch, carboxymethyl starch and/or hydroxypropylcarboxymethyl starch.

5.  A building material mixture containing an additive combination as claimed in any one of claims 1 to 4.

6. A building material mixture as claimed in claim 5, containing from 0.01 to 2% by weight, preferably 0.02 to 1% by weight, based on the dry weight, of the additive combination.

7. Use of an additive combination as claimed in any one of claims 1 to 4 in building material mixtures, in particular for cement tile adhesives, fillers and plasters.

## Revendications

1. Composition de produits d'addition pour mélanges de matériaux de construction à l'eau, constituée

   a) au moins 65 % en poids et de préférence de 65 à 98 % en poids d'un éther de cellulose soluble dans l'eau ou d'un de ses dérivés,
   b) de 1 à 15 % en poids de polyacrylamide,
   c) de 1 à 20 % en poids d'un sel d'un métal alcalin ou d'ammonium d'un polyacrylate réticulé, éventuellement greffé par de l'amidon,
   d) de 0 à 20 % en poids d'un éther d'amidon, et
   e) de 0 à 15 % en poids d'un sel soluble dans l'eau d'un métal alcalin, d'un métal alcalino-terreux ou d'ammonium des produits de condensation d'un acide arylsulfonique et de formaldéhyde, ou d'un produit de polycondensation, modifié par un acide sulfonique, de mélamine et de formaldéhyde.

2. Combinaison de produits d'addition selon la revendication 1, caractérisée en ce qu'elle contient comme éthers de cellulose solubles dans l'eau une méthylhydroxyalkylcellulose, une hydroxyalkylcellulose et/ou une alcoxyhydroxyéthylhydroxypropylcellulose ayant une viscosité de 10 à 500 000 et notamment de 50 à 150 000 mPa.s.

3. Combinaison de produits d'addition selon la revendication 1 ou 2, caractérisée en ce qu'elle contient comme polyacrylamides des polyacrylamides anioniques, cationiques et/ou non ioniques ayant une masse moléculaire moyenne en masse $\overline{M_w}$ de $1 \cdot 10^6$ à $10 \cdot 10^6$.

4. Combinaison de produits d'addition selon l'une des revendications 1 à 3, caractérisée en ce qu'elle contient comme éthers d'amidon de l'hydroxypropylamidon, du carboxyméthylamidon et/ou de l'hydroxypropylcarboxyméthylamidon.

5. Mélanges de matériaux de construction contenant une combinaison de produits d'addition selon l'une des revendications 1 à 4.

6. Mélanges de matériaux de construction selon la revendication 5, contenant de 0,01 à 2 et de préférence de 0,02 à 1 % en poids, par rapport à la masse sèche, de la composition de produits d'addition.

7. Utilisation de la combinaison de produits d'addition selon l'une des revendications 1 à 4 dans des mélanges de matériaux de construction, en particulier pour des colles pour carrelages à base de ciment, produits de rebouchage et enduits.